(19) Europäisches Patentamt
European Patent Office
Office européen des brevets

(11) **EP 4 732 930 A2**

(12) **EUROPEAN PATENT APPLICATION**

(43) Date of publication:
**29.04.2026 Bulletin 2026/18**

(21) Application number: **25202343.7**

(22) Date of filing: **16.09.2025**

(51) International Patent Classification (IPC):
**B01D 53/04** (2006.01)    **B01D 53/06** (2006.01)
**B01D 53/08** (2006.01)

(52) Cooperative Patent Classification (CPC):
**B01D 53/0446; B01D 53/0407; B01D 53/0415;**
**B01D 53/0431; B01D 53/06; B01D 53/08;**
B01D 2253/34; B01D 2253/342; B01D 2253/3425

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **24.09.2024 IN 202421071999**

(71) Applicant: **Tata Consultancy Services Limited Maharashtra (IN)**

(72) Inventors:
• **CHAUDHARY, AYUSH**
**201309 Noida (IN)**

• **BADHAN, NAVNEET SINGH**
**110001 New Delhi (IN)**
• **SUHAIL, MOHAMMED**
**411057 Pune (IN)**
• **SUBRAMANIAN, SIVAKUMAR**
**411006 Pune (IN)**
• **RUNKANA, VENKATARAMANA**
**411028 Pune (IN)**
• **RAO, DAVULURI PRAHLAD**
**500049 Hyderabad (IN)**

(74) Representative: **Goddar, Heinz J.**
**Boehmert & Boehmert**
**Anwaltspartnerschaft mbB**
**Pettenkoferstrasse 22**
**80336 München (DE)**

(54) **PACKED BED COLUMN WITH STACKED PACKED CHANNELS FOR PROCESSING GAS AND METHOD THEREOF**

(57) This disclosure relates generally to processing of gas using packed bed column, and more particularly, a packed bed column with stacked packed channels for processing gas. In current packed bed column configurations, the problems of maldistribution of gaseous stream across the packed beds and channeling associated with the packed beds results in high power requirements and operating expenses. The present disclosure includes gas distribution mechanisms and stacked packed channels for proper gas distribution and channeling of the incoming gaseous stream. The gas distribution mechanisms ensure that the incoming gas gets distributed evenly to the packed bed. This greatly increases the productivity of the process and increases the process efficiency as more area is available for heat and mass transfer to take place. The disclosed configuration is used for gas separation via adsorption, thermal energy storage applications and so on.

FIG. 1

EP 4 732 930 A2

## Description

CROSS-REFERENCE TO RELATED APPLICATIONS AND PRIORITY

The present application claims priority from Indian provisional patent application no. 202421071999, filed on September 24, 2024. The entire contents of the aforementioned application are incorporated herein by reference.

TECHNICAL FIELD

The disclosure herein generally relates to processing a gaseous stream using packed bed column, and, more particularly, packed bed column with stacked packed channels for processing gas and method thereof.

BACKGROUND

A packed bed column is a type of chemical reactor or separation device commonly used in chemical engineering, petrochemical processes, and environmental engineering. It consists of a cylindrical vessel filled with packing material. The packing material is typically made of small, randomly oriented particles such as beads or structured materials such as monolith and laminate. In a packed bed column, one or more fluid phase pass through the packing material. The packing creates a large surface area, especially the particles are porous, and pathways for the fluid, enhancing contact between the phases and improving mass or heat transfer characteristics for the chemical reaction. The different applications of the packed bed column are absorption, adsorption, conducting reactions between phases, and thermal energy storage for applications such as industrial (or solar) heat recovery and residential or commercial heating and cooling systems. In gas separation using adsorption, the molecules of the heavy (more adsorbing) component of the gaseous mixture adhere to the surface of the sorbent, thus separating the target gas from the gaseous mixture. The sorbent is then regenerated by creating pressure, temperature, or concentration conditions to release the target gas from its surface and preparing the bed for the next cycle of adsorption. Adsorption has a wide range of application; it is used to produce high-purity oxygen or nitrogen from air, separate carbon dioxide from flue gas exhaust from various industries such as cement plant, power plant and automobiles, recover helium, and remove moisture from air. Packed bed column is also used as a catalytic reactor in petrochemical and chemical industries for catalytic reactions such as synthesis of ammonia, methanol and various hydrocarbons. It is also used for hydrogenation of vegetable oils or dehydrogenation of hydrocarbon. Thermal energy received from the sun can also be stored in packed column containing materials such as ceramics and gravels. This thermal energy is cyclically (periodically) recovered to be used as thermal energy or converted to other forms of energy such as electricity. There are several advantages for the packed bed column: it is the simplest of all column configurations to contact a fixed solid phase with a flowing gas phase, its plug-flow nature ensures minimal back mixing of fluid molecules, it is easier to operate and maintain and the like. However, the packed bed column has a few disadvantages: it imposes very high pressure drop resulting in very high energy consumption, it allows limited feed velocities, it has decreased process productivity due to large cycle time and the like.

SUMMARY

Embodiments of the present disclosure present technological improvements as solutions to one or more of the above-mentioned technical problems recognized by the inventors in conventional systems. For example, in one embodiment, packed bed column with stacked packed channels for processing gas is provided. The packed bed column with multiple packed beds comprises a packed bed assembly comprising one or more feed lines, one or more product lines, one or more valves, an inlet gas distribution zone, a gas distributor, and one or more packed beds. The one or more feed lines are connected to the packed bed column for feeding the gaseous stream to the one or more packed beds. The one or more product lines are connected to the packed bed column for letting out processed gas from the one or more packed beds. The one or more valves are attached to the one or more feed lines and the one or more product lines. The gas distributor is placed in the inlet gas distribution zone, facilitating uniform distribution of the gaseous stream to the one or more packed beds. The one or more packed beds is placed above the inlet gas distribution zone. Each packed bed is of any geometrical shape comprising a set of packed channels stacked together. Each packed channel is of any geometrical shape comprising a packing material. The inlet gas distribution zone starts from the gas distributor to the point of contact of the gaseous stream with the packing material. The inlet gas distribution zone is placed below a first packed bed amongst the one or more packed beds. The one or more packed beds are stacked in one of (i) horizontally, or (ii) vertically based on space requirements of the packed bed assembly.

The gas distributor is one of (i) a passive gas distributor, or (ii) an active gas distributor. The active gas distributor is one of (i) with a plurality of gas outlets or (ii) without the plurality of gas outlets. The active gas distributor is one of (i) flow activated, or (ii) mechanically rotated. And it is coaxial with incoming gaseous stream. An opening size of the plurality of gas outlets is variable facilitating uniform distribution of the gaseous stream, and an opening of the plurality of gas outlets is of any geometrical shape. A plurality of active gas distributors for a plurality of packed bed columns is mounted on same axis or on a primary mover.

The set of packed channels stacked together inside the one or more packed beds is one of (i) an axial arrangement, or (ii) a radial arrangement. A dominant direction of movement of the gaseous stream in the packed bed assembly is one of (i) the axial movement, or (ii) the radial movement. The packing material of a variable size, packed inside the set of packed channels up to a variable length facilitates uniform gaseous stream distribution. A plurality of retainers placed in the set of packed channels, holds the packing material in place to avoid sliding. The packing material in the one or more packed beds is at least one of (i) same packing material or (ii) different packing material. The packing material is at least one of (i) an active structured or unstructured material or (ii) particulate material facilitating higher surface area for contact between phases for (a) effective chemical reaction, or (b) effective mass transfer, or (c) effective heat transfer, or (d) combination thereof. The packing material is made of one of (i) physio chemically active material, or (ii) inert material, wherein the physio chemically active material is coated or impregnated with an inert or support material.

In another embodiment, a process for processing a gaseous stream using a packed bed column with stacked packed channels is provided. The process includes, feeding, via one or more feed lines, the gaseous stream from a source to an inlet gas distribution zone comprised in a packed bed assembly. The process further includes, uniformly distributing the gaseous stream, via a gas distributor, to one or more packed beds. Finally, the process includes processing the gaseous stream using the one or more packed beds to obtain a processed gas. In an embodiment, one or more packed bed columns is connected via the one or more feed lines and the one or more product lines to operate in a sequential manner to accomplish any one of (i) a cyclic process, or (ii) a steady process, for processing the gaseous stream. In another embodiment, the one or more packed bed columns is used for multi-step gas separation process via adsorption using different regeneration techniques comprising pressure swing adsorption (PSA), vacuum swing adsorption (VSA), temperature swing adsorption (TSA), concentration swing adsorption (CSA) or a combination thereof. In yet another embodiment, the one or more packed bed columns is used for steady process for solid catalyzed chemical reactions. In another embodiments, the one or more packed bed columns is used for regenerative heating and cooling for gas or vapor mediated heat storage applications using the inert material.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 is a schematic diagram of a packed bed column (100) with stacked packed channels according to some embodiments of the present disclosure.

FIG. 2 is a schematic diagram of the packed bed assembly of the packed bed column according to some embodiments of the present disclosure.

FIG. 3A and FIG. 3B is a schematic diagram of a packed bed with rectangular packed channels and a packed bed with hexagonal packed channels respectively according to some embodiments of the present disclosure.

FIG.4 is a schematic diagram of multiple hexagonal packed beds stacked together in a column and corresponding axial gas flow according to some embodiments of the present disclosure.

FIG.5 is a schematic diagram of multiple rectangular packed beds stacked together in a column and corresponding axial gas flow according to some embodiments of the present disclosure.

FIG.6A, FIG.6B, FIG.6C and FIG.6D show different instances of passive gas distributors according to some embodiments of the present disclosure.

FIG.7A, and FIG.7B show different instances of active gas distributors according to some embodiments of the present disclosure.

FIG.8A and FIG.8B are cross-sectional views showing variable packing length within packed channels according to some embodiments of the present disclosure.

FIG. 9 is a schematic diagram of a radial flow packed bed where gas flow is radial according to some embodiments of the present disclosure.

FIG. 10 is a schematic diagram of a radial flow packed bed with separators for the packed channels according to some embodiments of the present disclosure.

FIG.11 is a schematic diagram showing the distribution of gaseous stream in radial flow packed channels according to some embodiments of the present disclosure.

FIG.12 shows a top view of the radial flow packed bed showing location of gas distributor according to some embodiments of the present disclosure.

FIG. 13 is an exemplary flow diagram illustrating a process for processing the gaseous stream using the packed bed column with stacked packed channels according to some embodiments of the present disclosure.

FIG. 14A and FIG.14B depict vacuum swing operation in packed bed according to some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

A packed bed column is a type of reactor commonly used in chemical engineering, petrochemical processes and environmental engineering. In a packed bed column, one or more fluid phases pass through the packing material, which provides a large surface area for contact between the fluid and solid phase, enhancing the heat and mass transfer characteristics of the process. The packing material could be unstructured such as beads or structured such as monolith and laminate. Packed bed is typically used for conversion or capture of the fluid phase by physio-chemical reaction with the solid phase. Common applications of the packed bed include distillation, filtration, ion exchange, thermal energy storage, and gas separation via absorption and adsorption.

The most common method for gas separation, absorption, has several drawbacks. The liquid-gas system suffers from drawbacks such as high energy consumption, column corrosion and solvent losses due to factors such as chemical degradation and evaporation. Also, this system is difficult to operate and maintain compared to solid-gas system, adsorption. Adsorption, which has gained a lot of attention from research and industrial community alike in the recent years, employs various regeneration techniques comprising vacuum swing adsorption (VSA), pressure swing adsorption (PSA), temperature swing adsorption (TSA), concentration swing adsorption (CSA) or a combination thereof such as pressure temperature swing adsorption (PTSA). Since depressurization is involved in both pressure and vacuum swings operations, these two regeneration techniques have been used interchangeably in this work.

Adsorption can be accomplished in several column configurations which can be broadly classified into fixed bed, true moving bed, simulated moving bed and fluidized moving bed, each with its own advantages and drawbacks. The fixed bed adsorption process, in which gas passes through a stationary sorbent bed, is the simplest of all the column configurations, and hence is easy to operate and maintain. The plug-flow nature of the bed is the biggest advantage of this configuration, ensuring limited back-mixing of the gas molecules. However, fixed beds are known to impose a very high pressure drop in the column even at moderate feed velocities, resulting in very high energy consumption because of increased pumping costs and hence in high operating expenses. One of the ways to overcome this drawback is to use large adsorbent particles. But larger particles have a lower surface-area-to-volume ratio than smaller particles and cause longer mass and heat transfer zones, leading to poor adsorption productivity. Another alternative is to use structured sorbents such as monoliths and laminates which have been reported to have lesser pressure drop. But the different structured sorbents tested thus far have failed to considerably reduce the footprint due to low effective sorbent bulk density since they use an inert body as a support that occupies a large fraction of the column volume. They are also typically more expensive. Hence, there is a need for an innovation that, while meeting the constraints of process KPIs, can reduce the pressure drop in the fixed bed column and increase the energy efficiency of the process by reducing the overall energy consumption.

Embodiments of the present disclosure provides a packed bed column with stacked packed channel for processing a gaseous stream. Using the disclosed configurations of distributed flow resistances as mentioned in the later sections, problems associated with improper gas distribution such as channeling, maldistribution etc. have been addressed. The incoming gaseous stream to the packed bed column is distributed into a large area using an appropriately designed gas distributor and stacked packed channels comprised in the packed beds. The gas distribution mechanism disclosed ensures that the incoming gaseous stream is evenly distributed entirely to the packed bed. This increases the productivity of the process and process efficiency.

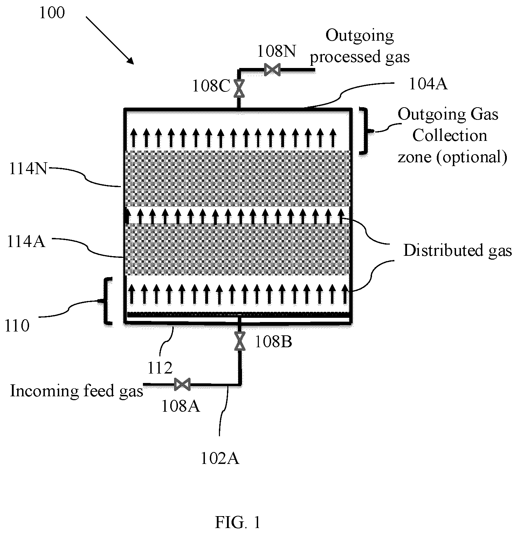

Referring now to the drawings, and more particularly to FIG. 1 through FIG. 14B, where similar reference characters denote corresponding features consistently throughout the figures, there are shown preferred embodiments and these embodiments are described in the context of the following exemplary system and/or method.

Reference numerals of one or more components of the packed bed column, as depicted in FIG.1 through FIG. 12 are provided in Table 1 below for ease of description.

Table 1

| S.NO | NAME OF COMPONENT | REFERENCE NUMERALS |
|------|-------------------|---------------------|
| 1 | Packed bed column | 100 |

(continued)

| S.NO | NAME OF COMPONENT | REFERENCE NUMERALS |
|---|---|---|
| 2 | One or more feed lines | 102A-N |
| 3 | One or more product lines | 104A-N |
| 4 | One or more valves | 108A-N |
| 5 | Inlet gas distribution zone | 110 |
| 6 | Gas distributor | 112 |
| 7 | One or more packed beds | 114A-N |
| 8 | Set of packed channels | 116A-N |
| 8 | Packing material | 118 |

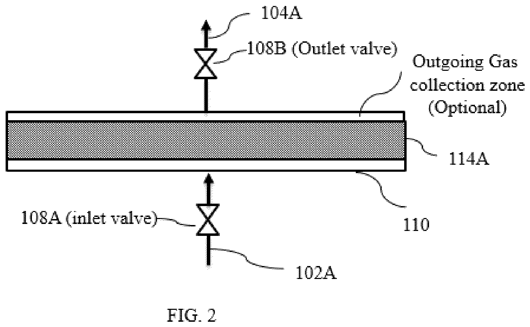

FIG. 1 is a schematic diagram of a packed bed column (100) with stacked packed channels according to some embodiments of the present disclosure. The disclosed packed bed column is used for processing a gaseous stream to generate a processed gas. The disclosed packed bed column configuration includes a packed bed assembly, comprising one or more feed lines (102A-N), one or more product lines (104A-N), one or more valves (108A-N), an inlet gas distribution zone (110), a gas distributor (112), and one or more packed beds (114A-N). The one or more feed lines are connected to the packed bed column for feeding the gaseous stream to the one or more packed beds (114A-N). Whereas the one or more product lines (104A-N) are connected to the packed bed column (100) for letting out the processed gas from the one or more packed beds (114A-N). The one or more valves (108A-N) are attached to the one or more feed lines (102A-N) and the one or more product lines (104A-N). The one or more valves (108A-N) includes (i) inlet valves connected to the one or more feed lines (102A-N) which is used in feeding the gaseous stream, and (ii) outlet valves connected to the one or more product lines (104A-N) which is used for letting out the processed gas. The gas distributor (112) which is placed in the inlet gas distribution zone (110), facilitates uniform distribution of the gaseous stream to the one or more packed beds (114A-N). The one or more packed beds (114A-N) are placed above the inlet gas distribution zone (110). As shown in FIG.1, the gaseous stream is distributed and proceeds from packed bed 1 to packed bed 2. Each packed bed is of any geometrical shape and comprises a set of packed channels which are stacked together. Each packed channel which is of any geometrical shape has packing material inside it. As shown in FIG.1, the inlet gas distribution zone (110) is placed below a first packed bed (packed bed 1) amongst the one or more packed beds (114A-N). The inlet gas distribution zone (110) starts from the gas distributor (112) to the point of contact of the gaseous stream with the packing material (118). FIG. 2 is a schematic diagram of the packed bed assembly of the packed bed column according to some embodiments of the present disclosure.

Referring to FIG.1, the incoming gaseous stream enters the packed bed assembly through the feed line and then proceeds towards the inlet gas distribution zone where gas distributor is present which distributes the gas evenly across the entire packed beds. The gaseous stream then comes in contact with the one or more packed beds and undergoes the processing of the same. It then exits the last packed bed and goes through the outgoing gas collection zone which is an optional component of the disclosed packed column configuration where the gas gets collected evenly and is sent to the next step. It then flows to the next process stage in the same manner and finally the lean gas exits the entire setup through the valve and the product line.

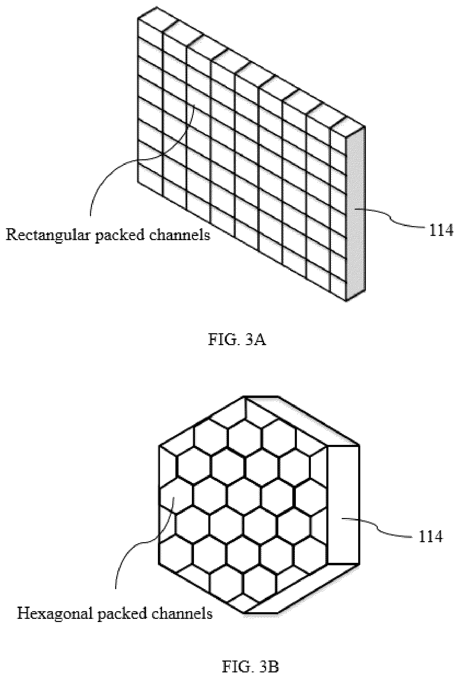

As mentioned earlier, the packed channel is of any geometrical shape, such as rectangular, hexagonal and so on that can be compactly arranged with minimal gap among them. These packed channels minimize the gas flow channeling and particle agglomeration or lumping. Further, if the packed channels are made of metallic sheets, it improves the conductivity of the bed, thus facilitating better heat conduction through the bed cross-section. A plurality of retainers are placed in the set of packed channels, such that it holds the packing material in place to avoid sliding. FIG. 3A and FIG. 3B is a schematic diagram of a packed bed (114) with rectangular packed channels and a packed bed (114) with hexagonal packed channels respectively according to some embodiments of the present disclosure. As can be seen in FIG.3A the entire packed bed is composed of small rectangular packed channels. These monolithic channels are of relatively shorter height and have packing material inside them or the packing material can be in the form of wall coating also. The packing material in the one or more packed beds is at least one of (i) same packing material or (ii) different packing material. The packing material is at least one of (i) an active structured or unstructured material or (ii) particulate material facilitating higher surface area for contact between phases for (a) effective chemical reaction, or (b) effective mass transfer, or (c) effective heat transfer, or (d) combination thereof. Also the packing material is made of one of (i) physio chemically active material, or (ii) inert material. The physio chemically active material is coated or impregnated with an inert or support material. The set of packed channels are stacked together inside the one or more packed beds in any one of the arrangements such as an axial arrangement, or a radial arrangement.

Multiple packed channels are stacked together in order to form a packed bed assembly with a large aspect ratio. This means that the ratio of the length to width of the entire assembly is in the range 1-5 indicating that the height is quite less when compared to the width of the entire assembly. This low value of height helps in having a less pressure drop which helps in reduction of the power requirement of the entire process. The availability of increased cross-section for a given gas flow rate reduces gas velocity linearly, which in turn brings down the pressure drop across the packed bed by a factor of square of the gas velocity. For example, when a packed bed's cross-section is doubled, the gas velocity is reduced to a factor of two. The pressure drop is directly proportional to square of the gas velocity. Hence if the gas velocity reduces by a factor of two, pressure drop reduces by a factor of four. In a similar way to the hexagonal channels, as shown in FIG.3B, multiple hexagonal channels can also be stacked next to each other to form another kind of packed bed assembly having a small height to width ratio. The channels should be chosen and stacked against each other in a way which ensures that there is minimal voidage or void space between them.

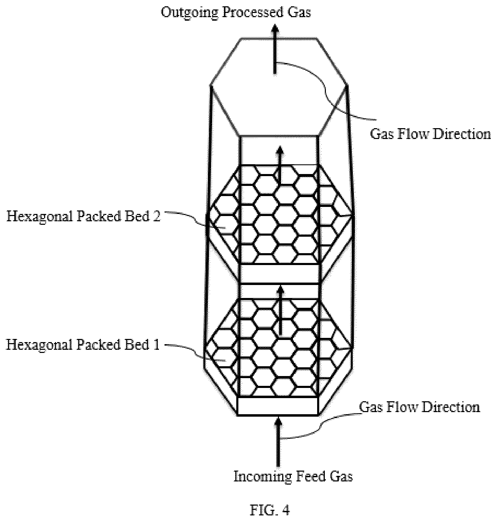

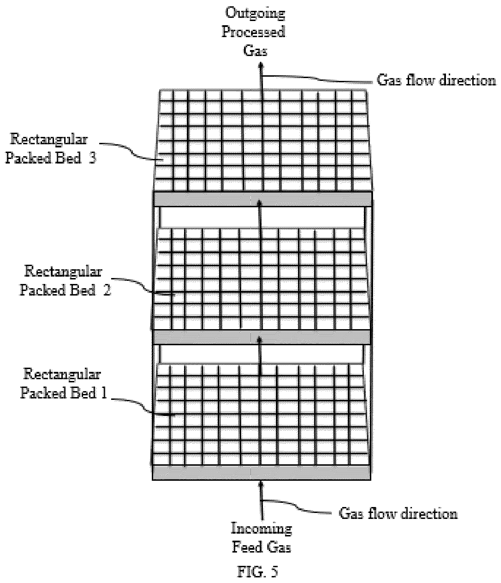

The compactness of the packed beds also allows for modular and serialized operation where multiple packed beds can be stacked next to each other. This allows for the use of different packing materials, alternatively referred as adsorbent material or adsorbents, in each of them, which are selected based on their working capacities and suitability to the required process parameters and operating conditions. This helps in improving the process performance as different packing materials could be used in different packed beds with each of them working optimally for the given input of the feed gas conditions. Different packing material perform well in different working capacities, therefore as the flue gas entering subsequent packed beds has different content of targeted component, the same packing material in all the packed beds may not be the best configuration to have. Therefore, based on the flue gas conditions different adsorbents can be employed based on their working capacities and flow conditions with each of them working optimally in the given range, thus maximizing process KPI's such as recovery, purity and productivity. Along with that different packed beds could be placed strategically to remove moisture and other non-desirable components such as NOx and SOx which can hamper the downstream adsorption process. Along with that maintenance of the packed beds becomes easy as individual ones could be taken out for maintenance purposes without significantly hampering the process operation. All the stacked packed beds are housed in an outer casing which lends support and stability to the entire structure. All this lends a great degree of modularity to the process and greatly improves its flexibility and efficiency. Two different configurations of multiple stacked packed beds are shown in FIG.4 and FIG.5. FIG.4 is a schematic diagram of multiple hexagonal packed beds stacked together in a column and corresponding axial gas flow according to some embodiments of the present disclosure. FIG.5 is a schematic diagram of multiple rectangular packed beds stacked together in a column and corresponding axial gas flow according to some embodiments of the present disclosure. In both FIG.4 and FIG.5, white space between the packed beds is indicative only and not representational. The packed bed column along with one or more packed beds stacked together can be configured in (i) horizontal, or (ii) vertical configurations based on space requirements. It might be worth pointing out that the cross-section of packed bed column need not be circular, rather can be of any regular shape such as rectangular, square, and hexagonal suitably, host the packed beds with packed channels tightly.

Ensuring proper gas distribution is one of the major challenges when employing the packed bed column for processing the gaseous stream. Generally, the incoming gaseous stream enters through the feed line which has a diameter of almost 10 to 20 times less than the width of the packed bed column. Therefore, the incoming gaseous stream must be distributed in an area which is considerably larger than the one through which it has been introduced. Therefore, in order to prevent the problems of channeling and maldistribution, it has to be ensured that the incoming gaseous stream is distributed properly to ensure proper utilization of the entire packed bed and maintaining productivity of the process. One of the ways is to provide ample length for the gas to distribute fully after it has exited from the feed line and before it encounters the packing material in the packed bed. But this design could substantially reduce the product purity and/or recovery as the gas held in this volume could remain unprocessed as the columns cycle through multiple steps of the process. Therefore, it is critical to have a uniform gas distribution for the gas entering the bed through the inlet gas distribution zone in the shortest length and time frame possible. It can be achieved through specialized gas distributors that are specifically tailored to evenly distribute the gas to the entire packed bed. Therefore, the inlet gas distribution zone has been placed specifically below the first packed bed amongst the one or more packed beds which will house the gas distributor inside it and will allow the gas to be distributed evenly to the entire packed bed. An optional provision for collection of the outgoing processed gas has also been made in the form of an outgoing gas collection zone which will ensure that the gas exiting through the packed bed after contacting the packing material is properly collected and sent through the valve.

One of the main issues with the packed beds lies in the gas distribution aspects. Since the width of the packed bed is quite large as compared to the length of the packed bed it becomes imperative for the incoming gas to flow through all the packed channels of the packed bed for efficient utilization of the packed bed. But since the incoming pipeline through which the gas enters has a diameter which is considerably less than the width of the bed, it is difficult to achieve uniform gas distribution across the packed bed in a small length. Also providing more space for the gas flow to develop and spread on its own is also not a feasible option as this would greatly affect the compactness of the setup and will add on to the operational as well as capital costs of the process hampering KPIs of the process such as product purity, and recovery. The gas distributor is housed in the inlet gas distribution zone from where it will collect the incoming gas coming through the pipeline and will then distribute the gas evenly using the gas distributor. The main principle to achieve this is by ensuring that the gas encounters equal resistance to flow and uniform pressure drop all across the packed bed so that there is no preferential gas flow happening which will reduce channeling and the problem of maldistribution. The gas distributor can be one of an active gas distributor or a passive gas distributor. The active gas distributor can be with a plurality of gas outlets or without the plurality of gas outlets. Also, active gas distributors can be flow activated or mechanically rotated and they are coaxial with the incoming gaseous stream. The opening size of the plurality of gas outlets is variable facilitating uniform distribution of the gaseous stream. The opening of the plurality of gas outlets is of any geometrical shape. A plurality of active gas distributors for a plurality of columns can be mounted on same axis or on a primary mover. The passive gas distributor has plurality of gas outlets and is stationary with the flow of the gaseous stream.

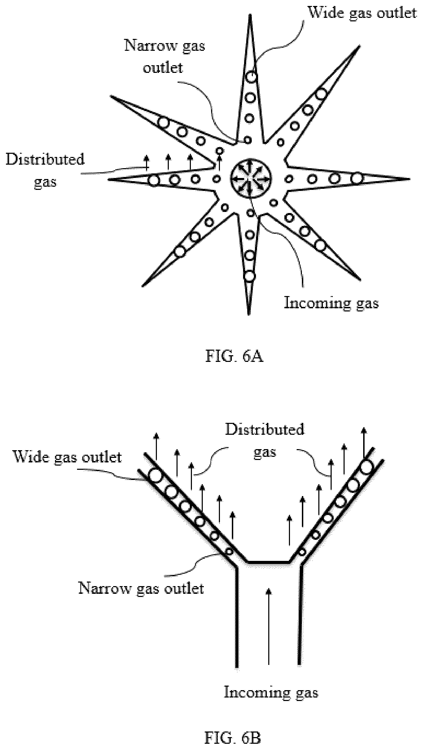

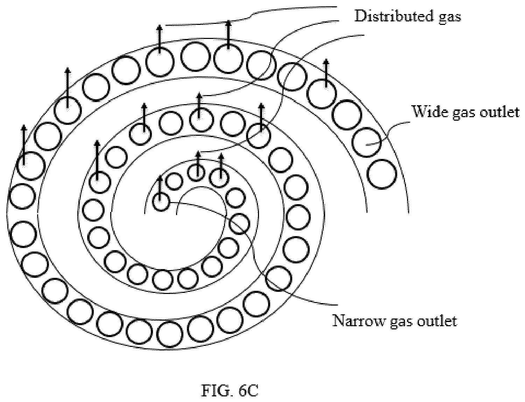

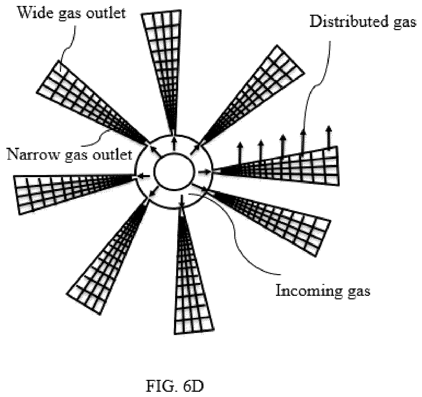

In an embodiment, FIG.6A, FIG.6B, FIG.6C and FIG.6D show different instances of passive gas distributors according to some embodiments of the present disclosure. The incoming gas has more tendency to flow towards the center part through which it has entered rather than the periphery. In order to allow the flow to happen the concept of pressure drop in fluid mechanics is used. Pressure drop is inversely proportional to the hydraulic diameter which means greater the hydraulic diameter less is the pressure drop and vice versa. Therefore, to drive the flow towards the periphery the disclosed configuration uses a concept where the part of the incoming gaseous stream is made to flow towards the periphery where the gas outlet openings are big and also the resistance to gaseous flow offered is smaller. The gas outlet openings close to the inlet are kept small, thus offering more resistance to gas flow and driving the flow towards the periphery also. The openings are widened gradually as on moving away from the center, thus the resistance to the flow or the pressure drop is lessened, which enables the gas to also flow towards the outer areas as well and not remain concentrated near the central axis itself. This whole redistribution of the resistances allows the gas flow to get distributed evenly across the entire bed. This arrangement can be seen in FIG.6A and FIG.6B. As shown in the figures, the gas outlet openings get wider when moving away from the central axis or the point of gas entry. The gas outlet openings are designed in such a way that they offer equal resistance or pressure drop to the gas flow, which enables equal amount of gas to come out, which eventually results in equal distribution of the incoming gaseous stream. The same concept has been used in FIG.6C and FIG.6D where different configurations of the gas distributors have been conceptualized. FIG.6C shows a spiral distributor with increasing opening size as moved away from the central axis. Similarly, FIG.6D shows a configuration where mesh has been used as a gas outlet instead of a round opening. The mesh opening increases when moving away from the center and towards the periphery enabling a uniform distribution all across the packed bed. These configurations shown in FIG.6A through FIG.6D for gas distribution are passive elements which means they are stationary and do not move.

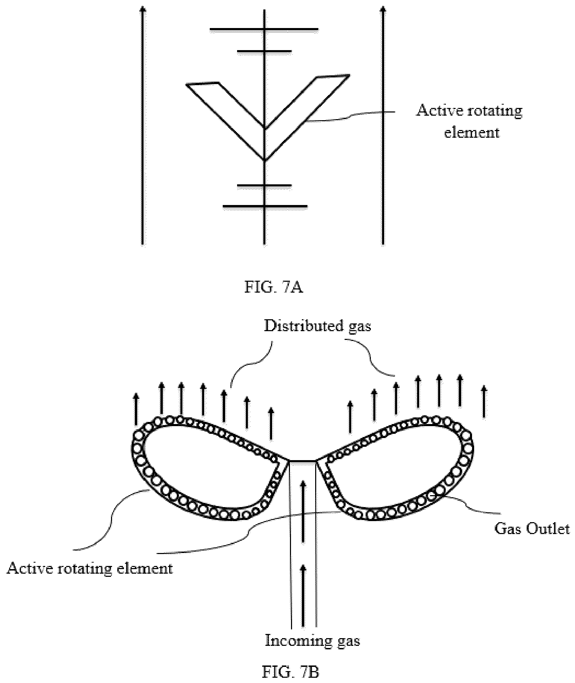

In an embodiment, FIG.7A, and FIG.7B show different instances of active gas distributors according to some embodiments of the present disclosure. These gas distributors have active elements which are not stationary but rotate while gas moves through them. This rotary motion facilitates better distribution of the gas as more area of the packed bed could be covered in a relatively short period of time. As can be seen in FIG.7A and FIG.7B the gas passes through the active elements. These elements then rotate about an axis of rotation while simultaneously disbursing the gaseous stream. The design shown in FIG. 7A uses flow of gas itself to rotate around a fixed axis on which the aerodynamic mixer blade is mounted. As seen in FIG.7B strategically placing the gas outlet openings with increasing opening size along the periphery further enhances the efficiency of gas distribution. The only drawback is that it increases the complexity of the process and the energy usage as well which results in an increase in maintenance costs.

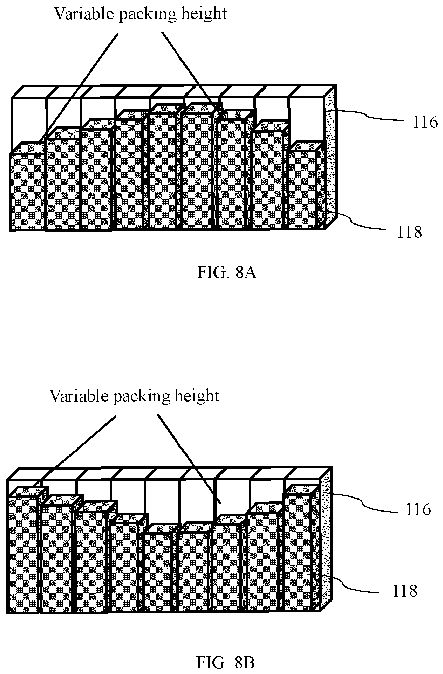

In an embodiment, proper distribution of gas is also ensured by having variable packing heights within the packed channels. In some instances, gas distributors may not be able to entirely distribute the gas across the packed bed for proper utilization. In such cases, variable packing heights within the packed channels are used. The pressure drop across any packed channel is dependent on the amount of packing material it has and increases with the amount of packing material inside the packed channel. This fact is utilized to ensure even flow resistance across the packed bed by varying the packing height inside the packed channel based on the incoming gas distribution. The packing height could be more at the central area and could gradually reduce towards periphery. This makes the gas flow to have more resistance in the central area which thereby makes a part of the flow to be diverted towards the peripheral areas as well which otherwise would not have received any gas feed and all gas would have passed through the packed channels located in the central area only or in the area which are located in the direction of the gas flow. FIG.8A and FIG.8B are cross-sectional views showing variable packing length within packed channels according to some embodiments of the present disclosure. FIG. 8A shows an instance where the periphery has less packing height so that flow could be diverted there and FIG.8B shows that the periphery has more height than the central area. In simple terms, this flexibility of the packing channel design ensures more solids receiving more amount of gaseous stream and vice versa. These packing heights can be optimized for a given range of gas flow, gas distributor choice, packing characteristics, column cross-section, etc.

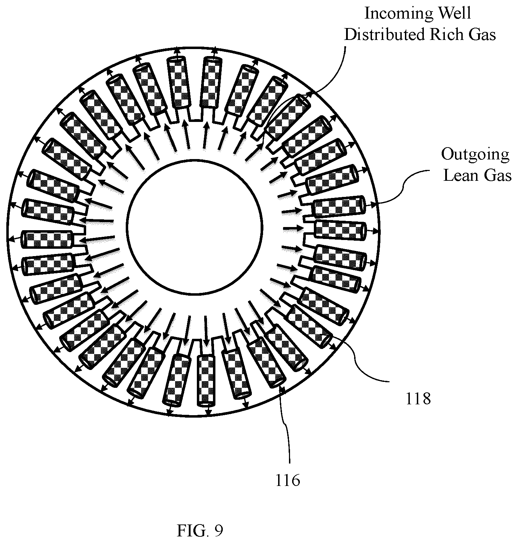

In another embodiment, a radial flow packed bed is used for the packed bed column. FIG. 9 is a schematic diagram of a radial flow packed bed where gas flow is radial according to some embodiments of the present disclosure. Here, the packed channels are also arranged radially. FIG.9 shows the packed channels are circular in nature with packing material filled inside them. The annular region from where the gas is coming in radially towards the packing material is also very small. This has been done to minimize any occurrence of dead volume in the system which contributes to gas holdup and lowers the efficiency of the process by bringing down the KPIs such as product purity and recovery of the system. Similarly, the outer annular region after the packing material also has a small width for the same purpose of reducing the dead volume and the width. The radial tubes can be of any regular cross-section shape that can be as closely packed as possible in the annular area, with each channel acting as a separate packed column or packed bed itself.

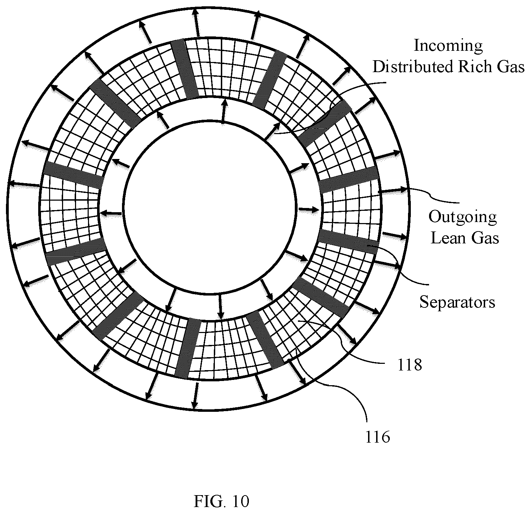

In another embodiment, the radial flow packed bed with separators is used. FIG. 10 is a schematic diagram of a radial flow packed bed with separators for the packed channels according to some embodiments of the present disclosure. The gas flow is radial and the packed channels created by the separators are also arranged radially. Again the actual width of the annular region both for the incoming gaseous stream and the outgoing gas mixture is quite small and the width shown in FIG. 10 is for representational purposes only. The major differentiating feature of this embodiment is the radially packed channels separated from each other using separators. The incoming gaseous stream flowing radially comes in contact with the packed beds with radially packed channels. The incoming gaseous stream moves from center to the periphery and as it moves in such manner, the gaseous stream becomes leaner in the target component as it has already come in contact with the adsorbent material. The major advantage of using the disclosed radial flow packed bed configuration in the present embodiment is that the amount or volume of adsorbent material available increases when moving from the center to the periphery. This means that more surface area is available for mass or energy transfer to take place when moving radially away towards the periphery. This also ensures that even when there is a drop in the amount of target component available in the gaseous stream as it moves radially away from the center, the transfer/removal process is not affected with the drop in the availability of the target component on account of availability of larger amount of surface contact area. This ensures that better removal of target component is possible as compared to the conventional designs wherein the amount of adsorbent material remains same and does not vary with the gas concentration or temperature and the transfer efficiency comes down when moving radially away from the center towards the periphery This embodiment enables availability of increased surface area for mass and heat transfer to happen as the mass fraction of the targeted component or the heat content comes down, enabling greater removal efficiency.

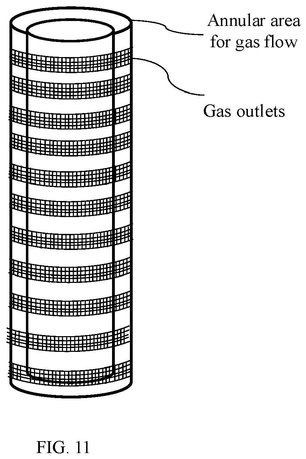

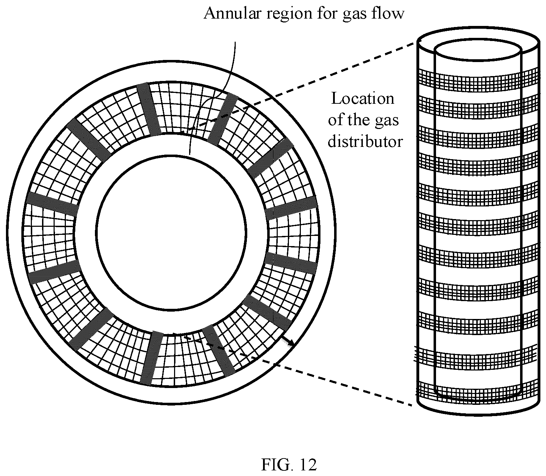

The gas distribution mechanism in the radial flow packed bed is shown using FIG.11. FIG.11 is a schematic diagram showing the distribution of gaseous stream in radial flow packed channels according to some embodiments of the present disclosure. As shown in the figure, the gas flows through the annular area and comes out through the gas outlets radially into the radial packed channels. FIG.12 shows a top view of the radial flow packed bed channels showing location of gas distributor according to some embodiments of the present disclosure. The central part of the radial packed bed is where gas flows through the annular region of the gas distributor and gets distributed radially.

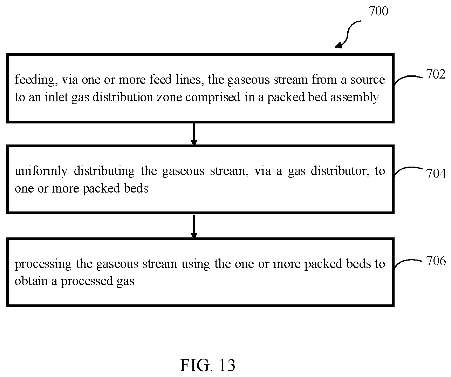

FIG. 13 is an exemplary flow diagram 700 illustrating a process for processing the gaseous stream using the packed bed column with stacked packed channels according to some embodiments of the present disclosure. FIG. 13 is explained in conjunction with the components explained for FIG. 1. At step 702 of the process 700, the gaseous stream is fed from a source to the inlet gas distribution zone comprised in the packed bed assembly, via the one or more feed lines. At step 704 of the process 700, the gaseous stream is uniformly distributed to the one or more packed beds via the gas distributor. At step 706 of the process 700, the gaseous stream is processed by the one or more packed beds to obtain a processed gas. One or more packed bed columns are connected via the one or more feed lines and the one or more product lines to operate in a sequential manner to accomplish any one of (i) a cyclic process, or (ii) a steady process, for processing the gaseous stream. In another embodiment, the one or more packed bed columns is used for multi-step gas separation process via adsorption using different regeneration techniques comprising pressure swing adsorption (PSA), vacuum swing adsorption (VSA), temperature swing adsorption (TSA), concentration swing adsorption (CSA) or a combination thereof. In another embodiment, the one or more packed bed columns is used for steady process for solid catalyzed chemical reactions. In yet another embodiment, the one or more packed bed columns is used for regenerative heating and cooling for gas or vapor mediated heat storage applications using inert materials.

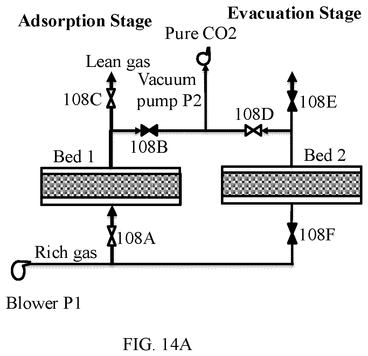

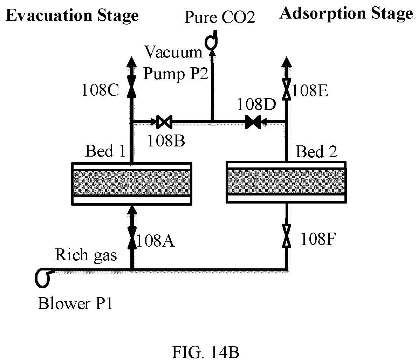

FIG. 14A and FIG.14B depict vacuum swing operation in packed bed according to some embodiments of the present disclosure. The figure shows the packed bed in a carbon capture setup. The figure shows bed 1 is undergoing adsorption step and simultaneously bed 2 is undergoing evacuation step. The rich gas containing high amounts of $CO_2$ in it comes in through the blower P1 where it is pumped at the required flow rate and pressure. It then enters the packed bed assembly through valve V1. Thereafter it first flows through the inlet gas distribution zone, where it gets distributed evenly all across the packed bed and then proceeds towards the packed bed channels containing the packing material. The rich gas undergoes the adsorption process where the packing material contained in the packed channels adsorbs the target component and becomes saturated with it. The gas becomes lean in the target component and then flows out of the packed bed into the outgoing gas collection zone. This part of the setup ensures that the gas exiting through the packed bed is properly collected and channeled into the outlet valve. The lean gas thus exits the packed bed assembly after it undergoes the adsorption process. The bed which has now become loaded with the target component needs to be made fresh again so that it undergoes another round of adsorption, which means the target component needs to be removed from the saturated packed bed. Therefore, as can be seen in FIG.14B bed 1 which is rich in the target component undergoes evacuation step in which vacuum is applied to remove the adsorbed target component. Simultaneously bed 2, which has been evacuated previously as can be seen in FIG.14A undergoes adsorption step as it became fresh for adsorption to take place. The beds keep on switching between these 2 steps and a continuous supply of the target component is obtained.

SIMULATION RESULTS: Simulation studies were performed to establish the efficacy of the disclosed packed bed column configuration. Adsorption process which involved capturing carbon dioxide from an incoming gaseous stream was simulated to establish the efficacy of the disclosed configuration. The simulated adsorption process was composed of several intermediate steps viz adsorption step, heating step, evacuation step, pressurization step and a cooling step which are performed in a sequential manner. The incoming gaseous stream rich in the target component ($CO_2$ in this case) is contacted with a packed bed made up of $K_2CO_3$. The complete adsorption cycle involved removal of the target component from the gas stream by the packed bed and then regeneration of the packed bed which involved removal of the targeted component ($CO_2$), so that it becomes ready again for the next capture cycle. All these process steps involved pumping or evacuation of gas streams which require pumping or vacuuming. This results in consumption of electrical energy as the gas has to overcome the pressure drop offered by the column given by the ergun equation 1 given below,

$$-\frac{\partial P}{\partial z} = \frac{150}{d_p^2}\left(\frac{1-\varepsilon}{\varepsilon}\right)^2 \mu_g v + \frac{1.75}{d_p}\left(\frac{1-\varepsilon}{\varepsilon}\right)\rho_g v^2 \qquad (1)$$

where, $P$ is the gas pressure, $z$ is the column length, $d_p$ is the sorbent particle diameter, $\varepsilon$ is the column void, $\mu_g$ is the gas viscosity, $\rho_g$ is the gas density, and $v$ is the interstitial gas velocity.

From the above equation the pressure drop across the packed bed column is directly proportional to the square of the velocity. Therefore if the pressure drop across the packed bed column decreases the electrical power required for pumping a given stream across the packed bed also decreases significantly on account of less resistance to gas flow as indicated by the reduction in pressure drop across the packed bed. As mentioned earlier, increased cross-section for a given gas flow rate reduces the gas velocity linearly and thus reduces the pressure across the packed bed by a factor of square of the reduction in the gas velocity. As can be seen in equations 2, 3 and 4, which are for calculation of the electrical energy required in the adsorption, evacuation and pressurization step respectively, these are functions of the velocity of that particular process. This means that if the velocity of that particular process comes down the electrical energy required also reduces. Therefore, with the drop in the pressure in the packed bed column offered by packed beds, the velocity comes down which eventually brings a significant reduction in the overall electrical energy requirements of the overall process. This has been validated by the results shown later in Table 2 and Table 3, which compare 2 cases, one employing high aspect ratio packed bed columns and the other employing low aspect ratio packed bed columns. Comparison was done based on the total energy consumption of the process and various other parameters with the current state of the art and the data reported in the literature.

$$E_{ads} = E_{heat} = E_{cool} = \frac{1}{\eta}\varepsilon\pi r_{in}^2 \frac{\gamma}{\gamma-1}\int_{t=0}^{t=t_{step}} vP|_{z=0}\left[\left(\frac{P|_{z=0}}{P_f}\right)^{(\gamma-1)/\gamma} - 1\right]dt \quad (2)$$

$$E_{evac} = \frac{1}{\eta}\varepsilon\pi r_{in}^2 \frac{\gamma}{\gamma-1}\int_{t=0}^{t=t_{evac}} vP|_{z=1}\left[\left(\frac{P_{atm}}{P|_{z=1}}\right)^{(\gamma-1)/\gamma} - 1\right]dt \;\; \text{if } P|_{z=L} \quad (2.2) <$$

$$1\,bar, \text{else } 0 \qquad (3)$$

$$E_{pres} = \frac{1}{\eta}\varepsilon\pi r_{in}^2 \frac{\gamma}{\gamma-1}\int_{t=0}^{t=t_{pres}} vP|_{z=0}\left[\left(\frac{P|_{z=0}}{P_f}\right)^{(\gamma-1)/\gamma} - 1\right]dt \;\; \text{if } P|_{z=0} > P_f, \text{else } 0 \quad (4)$$

As can be seen in Table 2 the L/D ratio for the packed bed case 1 was kept at 3 while for the case 2 the ratio has been kept at 0.375. Corresponding changes had been made in the length and diameter of the column to maintain the ratio details of which can be seen in Table 2.

Table 2

| Parameter | Case 1 | Case 2 |
|---|---|---|
| | L/D=3 | L/D=0.375 |
| Column Length [m] | 1.5 | 0.375 |

(continued)

| Parameter | Case 1 | Case 2 |
|---|---|---|
|  | L/D=3 | L/D=0.375 |
| Column Diameter [m] | 0.5 | 1 |

Table 3

| Column Void [-] | 0.37 | 0.37 |
|---|---|---|
| Sorbent | k2co3 | k2co3 |
| Particle Dia [m] | 0.002 | 0.002 |
| Sorbent Density [kg/m^3] | 1031.75 | 1031.75 |
| Sorbent Cp [J/kg-K] | 1000 | 1000 |
| CO2 Heat of Ads [J] | -27000 | -27000 |
| N2 Heat of Ads [J] | 0 | 0 |
| tortuosity | 3 | 3 |
| Pump efficiency | 72% | 72% |
| Blower efficiency | 72% | 72% |

Table 4

| Material property | Value | Units |
|---|---|---|
| Wall Density | 7800 | kg/m3 |
| Heat capacity (Wall) | 502 | J/kg K |
| Viscosity | $1.72 * 10^{-5}$ | Pa-s |
| Diffusivity | $1.60 * 10^{-5}$ | m2/sec |
| Adiabatic constant | 1.4 | - |
| Conductivity of gas | 0.0256 | W/m-K |

Tables 3 and 4 lists the process parameters or the operating conditions and the material property details used in the system for both the cases for all the steps involved in the simulation of the adsorption process respectively.

Table 5

|  | Temp [C] | | yCO2 [-] | | yN2 [-] | | Flowrate [kg/s] | | Time[s] | |
|---|---|---|---|---|---|---|---|---|---|---|
| L/D-> | 3 | 0.375 | 3 | 0.375 | 3 | 0.375 | 3 | 0.375 | 3 | 0.375 |
| ADS | 30 | 30 | 0.14 | 0.14 | 0.86 | 0.86 | 0.12 | 0.12 | 600 | 600 |
| HEAT | 300 | 300 | 1 | 1 | 0 | 0 | 0.47 | 0.47 | 600 | 600 |
| EVAC |  |  |  |  |  |  | 1 | 1 | 574 | 574 |
| COOL | 30 | 30 | 0 | 0 | 0.78 | 0.78 | 0.45 | 0.45 | 600 | 600 |

Table 6

|  | L/D=3 | L/D=0.375 |
|---|---|---|
| ADS [MJ] | 0.255 | 0.008 |
| HEAT [MJ] | 15.385 | 0.416 |
| EVAC [MJ] | 3.253 | 4.685 |
| PRES [MJ] | 0 | 0 |

(continued)

|  | L/D=3 | L/D=0.375 |
|---|---|---|
| COOL [MJ] | 12.142 | 0.336 |

Table 5 provides step wise operating conditions. As can be seen in Table 5 the flowrates for all the process steps in the 2 cases have been maintained at the same value along with the time each process step is being run. This is done to ensure same benchmarking for the 2 cases. The energy requirement from each of the processes for the 2 cases is shown in Table 6. As can be seen in Table 6 there is considerable difference in the electrical energy consumed for each of the process steps between the 2 aspect ratios. The energy consumption for L/D=0.375 (Low aspect ratio case) is considerably less for each process step when compared to the energy consumed in L/D=3 case (High aspect ratio case). Since the electrical energy consumption primarily tracks the energy consumed by the blowers and the vacuum pump, the data in Table 7 establishes the fact that the electrical energy required for these processes becomes significantly less when the aspect ratio is changed and the column becomes wider on account of the pressure drop becoming significantly less for a wide bed case. This reduction in the pressure drop results in less power requirement for the blowers and vacuum pump in order to pump or extract the gas stream through the column.

Table 7

| KPI | L/D=0.375 | L/D=3 |
|---|---|---|
| Total Electrical Energy [MJ] | 5.44 | 31.04 |
| Specific Electrical Energy [MJ/kg-CO2] | 0.39 | 2.16 |
| Recovery [%] | 99.31 | 97.89 |
| Productivity [kg CO2/kg-ads s] | 0.11 | 0.11 |
| Evacuation Pressure [bar] | 0.01 | 0.01 |
| Regeneration Temperature [C] | 300 | 300 |

As can be seen in Table 7, there is a considerable difference in the total electrical energy consumption of the 2 processes. While for L/D ratio of 3 the total electrical energy consumption is 31.04 MJ, it is 5.44 MJ for the packed bed process whose L/D ratio is 0.375. This shows that there is almost 10 times drop in the total electrical energy consumed if the L/D ratio of the column is changed. The low aspect ratio provided in the disclosed configuration and the provisions made in the packed channels practically makes the present configuration being realized as a wide packed bed configuration. Hence hereafter, the disclosed packed bed column and the packed beds may be alternatively referred to as wide bed packed column and wide packed beds respectively. The change in the electrical energy requirement as in the above two cases was achieved without compromising on the other major KPI's of recovery and purity which indicate the capture efficiency of the process. As can be seen in Table 7, the recovery of the process even improved from 97.99% for a high aspect ratio case to 99.31 % for the wide packed bed case. This establishes the efficacy of the disclosed packed bed column configurations in terms of the capture efficiency also, as the contact efficiency between the gas and the wide packed bed is increased on account of better availability of the contact area required for mass and heat transfer to happen. This indicates that using a wide packed bed with packed channels, better capture efficiency could be achieved with lower electrical energy. This significant reduction in electrical energy consumption results in considerable savings in operating and capital expenditure as less amount of pumping power is required and smaller capacity pumps could be installed. This also helps in improving the compactness of the system as the footprint of the entire setup is reduced as well. The reason for this drop in electrical energy consumption is the considerable reduction in pressure drop across the packed bed when compared to the current state of the art. As the length of the packed channels are smaller compared to conventional design configurations, and the design of disclosed wide packed beds on account of increased cross-sectional area reduces the gas velocity as well. Both these factors significantly bring down the pressure drop encountered by the gas stream and hence, the pumping power required to carry out the process and transfer of the gas eventually comes down resulting in significant savings.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure provide packed bed column with stacked packed channels. The disclosed configuration hereby provides a wide packed bed configuration where the length to diameter ratio is low. The low aspect ratio of the present invention where the length to the diameter ratio has been kept low ensures that the pressure drop is very low. This is because since pressure drop across a wide packed bed is directly proportional to the square of the gas velocity. Increased cross-section for a given gas flow rate reduces the gas velocity which in turn reduces the pressure drop across the packed bed ; Hence in the present disclosure a low aspect ratio is provided. In the present disclosure the flow path for gaseous stream is longer in the direction perpendicular to the flow (width), but shorter in the direction of flow (length). This shorter length means that the gaseous stream encounters less resistance as it moves vertically through the wide packed bed. This directly affects the power requirement of the process as higher the resistance to the gas flow higher is the pressure drop, as a result of which higher amount of pumping and vacuum power is required. Reduction in the pressure drop results in reduction in power requirements which eventually results in considerable savings in the capital and operating expenses.

Also using the disclosed arrangement of distributed flow resistances, problems associated with improper gas distribution such as channeling, maldistribution etc. have been addressed. Since the incoming gas to a packed bed has to get distributed to a considerably large area from the one through which it is coming in, there is a high probability that it might not get distributed all across the packed bed and the majority of the packed bed might remain underutilized which greatly reduces the productivity of the process. The gas distribution mechanisms provided in the present disclosure address these issues and ensure that the incoming gas gets distributed evenly to the entirety of the packed bed. This greatly increases the productivity of the process and also increases the process efficiency as more area is available for heat and mass transfer to take place. This also lowers the cycle time of the process and ensures efficient utilization of the packed bed without any additional expense on external machinery and processes. All these features of the present disclosure address the issues faced by the current state of the art.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

It is intended that the disclosure and examples be considered as exemplary only, with a true scope of disclosed embodiments being indicated by the following claims.

**Claims**

1. A packed bed column (100) with multiple packed beds for processing a gaseous stream comprising:
   a packed bed assembly, comprising one or more feed lines (102A-N), one or more product lines (104A-N), one or more valves (108A-N), an inlet gas distribution zone (110), a gas distributor (112), and one or more packed beds (114A-N),

   wherein the one or more feed lines (102A-N) connected to the packed bed column (100) for feeding the gaseous stream to the one or more packed beds (114A-N),
   wherein the one or more product lines (104A-N) connected to the packed bed column (100) for letting out processed gas from the one or more packed beds (114A-N),
   wherein the one or more valves (108A-N) attached to the one or more feed lines (102A-N) and the one or more product lines (104A-N),
   wherein the gas distributor (112) placed in the inlet gas distribution zone (110), facilitating uniform distribution of the gaseous stream to the one or more packed beds (114A-N),
   wherein the one or more packed beds (114A-N) placed above the inlet gas distribution zone (110), wherein each packed bed of any geometrical shape comprising a set of packed channels (116A-N) stacked together, wherein each packed channel of any geometrical shape comprising a packing material (118), and
   wherein the inlet gas distribution zone (110) starts from the gas distributor (112) to the point of contact of the gaseous stream with the packing material (118), wherein the inlet gas distribution zone (110) is placed below a first packed bed amongst the one or more packed beds (114A-N).

2. The packed bed column as claimed in claim 1, wherein

the one or more packed beds are stacked in one of (i) horizontally, or (ii) vertically based on space requirements of the packed bed assembly;
the set of packed channels stacked together inside the one or more packed beds is one of (i) an axial arrangement, or (ii) a radial arrangement; and
wherein a dominant direction of movement of the gaseous stream in the packed bed assembly is one of (i) the axial movement, or (ii) the radial movement.

3. The packed bed column as claimed in claim 1, wherein the gas distributor is one of (i) a passive gas distributor, or (ii) an active gas distributor,

wherein the active gas distributor

is one of (i) with a plurality of gas outlets or (ii) without the plurality of gas outlets,
is one of (i) flow activated, or (ii) mechanically rotated, and
is coaxial with incoming gaseous stream, and

wherein the passive gas distributor comprising the plurality of gas outlets, is stationary with the flow of the gaseous stream.

4. The packed bed column as claimed in claim 3,

wherein an opening size of the plurality of gas outlets is variable facilitating uniform distribution of the gaseous stream, and
wherein an opening of the plurality of gas outlets is of any geometrical shape; and
wherein a plurality of active gas distributors for a plurality of packed bed columns is mounted on same axis or on a primary mover.

5. The packed bed column as claimed in claim 1, wherein the packing material of a variable size, packed inside the set of packed channels up to a variable length facilitates uniform gaseous stream distribution.

6. The packed bed column as claimed in claim 5, wherein a plurality of retainers placed in the set of packed channels, holds the packing material in place to avoid from sliding.

7. The packed bed column as claimed in claim 1, wherein

the packing material in the one or more packed beds is at least one of (i) same packing material or (ii) different packing material,
wherein the packing material is at least one of (i) an active structured or unstructured material or (ii) particulate material facilitating higher surface area for contact between phases for (a) effective chemical reaction, or (b) effective mass transfer, or (c) effective heat transfer, or (d) combination thereof,
wherein the packing material is made of one of (i) physio chemically active material, or (ii) inert material and,
wherein the physio chemically active material is coated or impregnated with an inert or support material.

8. A process (700) for processing a gaseous stream using a packed bed column, comprising:

feeding (702), via one or more feed lines, the gaseous stream from a source to an inlet gas distribution zone comprised in a packed bed assembly;
uniformly distributing (704) the gaseous stream, via a gas distributor, to one or more packed beds; and
processing (706) the gaseous stream using the one or more packed beds to obtain a processed gas, wherein the processed gas exits from the packed bed assembly,

wherein the packed bed assembly comprising the one or more feed lines, one or more product lines, one or more valves, the inlet gas distribution zone, the gas distributor, and the one or more packed beds,
wherein the one or more feed lines connected to the packed bed column for feeding the gaseous stream to the one or more packed beds,
wherein the one or more product lines connected to the packed bed column for letting out the processed gas from the one or more packed beds,
wherein the one or more valves attached to the -one or more feed lines and the one or more product lines,
wherein the gas distributor placed in the inlet gas distribution zone, facilitating uniform distribution of the gaseous stream to the one or more packed beds,
wherein the one or more packed beds placed above the inlet gas distribution zone, wherein each packed bed of any geometrical shape comprising a set of packed channels stacked together, wherein each packed channel of any geometrical shape comprising a packing material, and
wherein the inlet gas distribution zone starts from the gas distributor to the point of contact of the gaseous stream with the packing material, wherein the inlet gas distribution zone is placed below a first packed bed amongst the one or more packed beds.

9. The process as claimed in claim 8, wherein

the one or more packed beds are stacked in one of (i) horizontally, or (ii) vertically based on space requirements of the packed bed assembly;
the set of packed channels stacked together inside the one or more packed beds is one of (i) an axial arrangement, or (ii) a radial arrangement; and
wherein a dominant direction of movement of the gaseous stream in the packed bed assembly is one of (i) the axial movement, or (ii) the radial movement.

10. The process as claimed in claim 8, wherein the gas distributor is one of (i) a passive gas distributor, or (ii) an active gas distributor,

wherein the active gas distributor

is one of (i) with a plurality of gas outlets or (ii) without the plurality of gas outlets,
is one of (i) flow activated, or (ii) mechanically rotated, and
is coaxial with incoming gaseous stream, and

wherein the passive gas distributor comprising the plurality of gas outlets, is stationary with the flow of the gaseous stream.

11. The process as claimed in claim 10, wherein

an opening size of the plurality of gas outlets is variable facilitating uniform distribution of the gaseous stream;
wherein an opening of the plurality of gas outlets is of any geometrical shape; and
wherein a plurality of active gas distributors for a plurality of packed bed columns is mounted on same axis or on a primary mover.

12. The process as claimed in claim 8, wherein the packing material of a variable size, packed inside the set of packed channels up to a variable length facilitates uniform gaseous stream distribution.

13. The process as claimed in claim 12, wherein a plurality of retainers placed in the set of packed channels, holds the packing material in place to avoid from sliding.

14. The process as claimed in claim 8, wherein

the packing material in the one or more packed beds is at least one of (i) same packing material or (ii) different packing material, and
wherein the packing material is at least one of (i) an active structured or unstructured material, or (ii) particulate material facilitating higher surface area for contact between phases for (a) effective chemical reaction, or (b) effective mass transfer, or (c) effective heat transfer, or (d) combination thereof,
wherein the packing material is made of one of (i) physio chemically active material, or (ii) inert material and,
wherein the physio chemically active material is coated or impregnated with an inert or support material.

15. The process as claimed in claim 8,

wherein one or more packed bed columns is connected via the one or more feed lines and the one or more product lines to operate in a sequential manner to accomplish any one of (i) a cyclic process, or (ii) a steady process, for processing the gaseous stream;

wherein the one or more packed bed columns is used for multi-step gas separation process via adsorption using different regeneration techniques comprising pressure swing adsorption (PSA), vacuum swing adsorption (VSA), temperature swing adsorption (TSA), concentration swing adsorption (CSA) or a combination thereof;

wherein the one or more packed bed columns is used for steady process for solid catalyzed chemical reactions; and

wherein the one or more packed bed columns is used for regenerative heating and cooling for gas or vapor mediated heat storage applications using the inert material.

100

Outgoing
108N    processed gas

108C

104A

Outgoing Gas
Collection
zone (optional)

114N

114A

Distributed gas

110

108B

112

Incoming feed gas
108A

102A

FIG. 1

FIG. 2

Rectangular packed channels — 114

FIG. 3A

Hexagonal packed channels — 114

FIG. 3B

Outgoing Processed Gas

Gas Flow Direction

Hexagonal Packed Bed 2

Hexagonal Packed Bed 1

Gas Flow Direction

Incoming Feed Gas

FIG. 4

Outgoing
Processed
Gas

Gas flow direction

Rectangular
Packed Bed 3

Rectangular
Packed Bed 2

Rectangular
Packed Bed 1

Gas flow direction

Incoming
Feed Gas

FIG. 5

Wide gas outlet

Narrow gas
outlet

Distributed
gas

Incoming gas

FIG. 6A

Distributed
gas

Wide gas outlet

Narrow gas outlet

Incoming gas

FIG. 6B

Distributed gas

Wide gas outlet

Narrow gas outlet

FIG. 6C

FIG. 6D

Active rotating
element

FIG. 7A

Distributed gas

Gas Outlet

Active rotating element

Incoming gas

FIG. 7B

Variable packing height

116

118

FIG. 8A

Variable packing height

116

118

FIG. 8B

Incoming Well
Distributed Rich Gas

Outgoing
Lean Gas

118

116

FIG. 9

Incoming
Distributed Rich Gas

Outgoing
Lean Gas

Separators

118

116

FIG. 10

Annular area
for gas flow

Gas outlets

FIG. 11

Annular region for gas flow

Location
of the gas
distributor

FIG. 12

700

feeding, via one or more feed lines, the gaseous stream from a source to an inlet gas distribution zone comprised in a packed bed assembly — 702

↓

uniformly distributing the gaseous stream, via a gas distributor, to one or more packed beds — 704

↓

processing the gaseous stream using the one or more packed beds to obtain a processed gas — 706

FIG. 13

**Adsorption Stage**  **Evacuation Stage**

Pure CO2

Lean gas

Vacuum

108C  pump P2  108E

108D

108B

Bed 1  Bed 2

108A  108F

Rich gas

Blower P1

FIG. 14A

FIG. 14B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421071999